# EUROPÄISCHE PATENTSCHRIFT

(11) **EP 0 323 947 B1**
(45) Veröffentlichungstag und Bekanntmachung des Hinweises auf die Patenterteilung: **24.03.1993**
(21) Anmeldenummer: 89730002.6
(22) Anmeldetag: 04.01.1989
(51) Int. Cl.: B65G 19/24, B65G 17/42

(54) **Mehrstrangkettenförderer**
Multiple-strand chain conveyor
Convoyeur à plusieurs lignes de chaînes

(30) Priorität: 06.01.1988 DE 3800342
(43) Veröffentlichungstag der Anmeldung: 12.07.1989
(73) Patentinhaber: RUD-Kettenfabrik Rieger & Dietz GmbH u. Co., D-73406 Aalen (DE)
(72) Erfinder: Puppel, Alfred, D-5600 Wuppertal (DE)
(74) Vertreter: Böning, Manfred, Dr.-Ing.

(56) Entgegenhaltungen:
- DE-A- 3 304 601
- DE-B- 1 023 402
- DE-U- 1 853 977
- DE-U- 1 931 880

## Beschreibung

Die Erfindung betrifft einen Mehrstrangkettenförderer, bei dem die Förderorgane mit zwei in gleich orientierte Anschlußglieder benachbarter Kettenstränge greifenden Kupplungselementen versehen sind, die jeweils einen abgewinkelten Vorsprung aufweisen, dessen einer Schenkel weitgehend den lichten Innenraum des ihm zugeordneten Anschlußgliedes ausfüllt, und dessen anderer ein abgewinkeltes, freies Ende bildender Schenkel jeweils einen Längsschenkel des Anschlusskettengliedes hintergreift.

Bei einem aus dem DE-U-19 31 880 bekannten Kettenförderer der vorstehenden Art werden die Kupplungselemente von Zapfen gebildet, deren gekröpfte Enden abgewinkelte Vorsprünge formen, welche entweder sämtlich von oben der aber sämtlich von unten in die lichten Innenräume von Horizontalgliedern greifen. Der bekannte Kettenförderer bietet den Vorteil, dass er sich aufgrund seiner Einfachheit mit vergleichsweise niedrigem Fertigungsaufwand kostengünstig herstellen lässt. Wenn er gleichwohl nicht voll zu befriedigen vermag, so liegt dies daran, dass die mit den Kupplungselementen verbundenen Anschlussglieder um ihre Längsachse unerwünscht grosse Schwenkbewegungen ausführen können, die die Sicherheit der Verbindung zwischen der Kettensträngen und den Förderorganen beeinträchtigen.

Um die angedeuteten Sicherheitsrisiken zu eliminieren, sind bei einem aus der DE-A-33 04 601 bekannten Kettenförderer jedem Anschlussglied zwei unmittelbar oder über ein Zwischenstück miteinander verbundene Kupplungselemente zugeordnet, die eine formschlüssige Halterung für die von ihnen umschlossenden Längsschenkel der Anschlussglieder bilden. Die erhöhte Sicherheit der zweiten Konstruktion ist mit einem merklich gesteigerten Kostenaufwand verbunden, der ihrer Anwendung in vielen Fällen entgegensteht.

Schliesslich ist aus dem DE-U-18 53 977 ein Kettenförderer mit Kupplungselementen bekannt, die ebenfalls abgewinkelte Vorsprünge aufweisen, bei denen aber nicht der mit dem Kupplungselement verbundene Schenkel, sondern der das abgewinkelte Ende des Vorsprunges bildende Schenkel in den freien Innenraum eines Anschlussgliedes ragt, und dies ohne dessen lichten Innenraum weitgehend auszufüllen. Bei dieser Konstruktion weisen die die abgewinkelten Enden bildenden Schenkel der Vorsprünge, welche in aufeinanderfolgende Anschlussglieder des gleichen Kettenstranges greifen, zwar in unterschiedliche Richtungen, gleichwohl lässt die Sicherung der Kettenstränge gegen Drehbewegungen um ihre Längsachse Wünsche offen und dies ganz abgesehen davon, dass der bekannte Kettenförderer eine wechselnde Anordnung der einem Kettenstrang jeweils zugeordneten Kupplungselemente auf sich gegenüberliegenden Seiten des Kettenstranges voraussetzt.

Der Erfindung liegt die Aufgabe zugrunde, einen Mehrstrangkettenförderer zu schaffen, bei dem die Förderorgane mit den Kettensträngen über jeweils ein Kupplungselement verbunden sind und bei dem trotz Verwendung vergleichs weise einfacher Kupplungselemente eine hinreichend grosse Sicherheit gegen ein ungewolltes Aushängen der Förderorgane aus den Kettensträngen zumindest in all den Fällen gegeben ist in denen zwischen den Anschlussgliedern für zwei aufeinanderfolgende Förderorgane ein- und desselben Kettenstrangpaares nur wenige Kettenglieder angeordnet sind.

Die vorstehende Aufgabe wird bei einem Mehrstrangkettenförderer der in Betracht gezogenen Art erfindungsgemäss dadurch gelöst, dass die den Anschlussgliedern der äusseren Kettenstränge des Mehrstrangkettenförderers zugeordneten Vorsprünge von in Kettenstrangrichtung aufeinanderfolgenden Kupplungselementen derart in die lichten Innenräume der Anschlussglieder greifen, dass ihre abgewinkelte Enden bildenden anderen Schenkel in unterschiedliche Richtungen weisen.

Der erfindungsgemässe Kettenförderer bietet den Vorteil, dass bei ihm durch den Wechsel der Eingriffsrichtung der Vorsprünge in die Anschlussglieder auf überraschend einfache und wirkungsvolle Weise das Ausmass der Schwenkbewegungen von Anschlussgliedern um ihre Längsachse soweit reduziert wird, dass die Gefahr eines Aushängens von Vorsprüngen aus den Anschlussgliedern bei üblicher, eng aufeinanderfolgender Förderorgananordnung praktisch beseitigt ist. Die Förderorgane werden mit anderen Worten nicht durch die Ausbildung und/oder Zahl ihrer Kupplungselemente sicher mit den Kettensträngen verbunden, sondern durch eine geschickt gewählte unterschiedliche Orientierung ihrer Kupplungselemente bzw. deren Vorsprünge.

Die Erfindung wird im folgenden anhand der beigefügten Zeichnung näher erläutert. Es zeigen:
Fig. 1 einen Kratzer mit zwei Kupplungselementen gleicher Orientierung A für einen Kettenförderer mit Taschenkettenrädern,
Fig. 2 einen Kratzer mit zwei Kupplungselementen ungleicher Orientierung A bzw. U für einen Kettenförderer mit Taschenkettenrädern,
Fig. 3 die Lage eines Kettengliedes in einem Kupplungselement der Orientierung A gemäß Fig. 1,
Fig. 4 die Lage eines Kettengliedes in einem Kupplungselement der Orientierung U gemäß Fig. 2,
Fig. 5 einen Kratzer mit zwei Kupplungselementen gleicher Orientierung A für einen Kettenförderer mit Zahnkettenrädern,
Fig. 6 einen Kratzer mit zwei Kupplungselementen ungleicher Orientierung A bzw. U für einen Kettenförderer mit Zahnkettenrädern,
Fig. 7 die Lage eines Kettengliedes in einem Kupplungselement der Orientierung A gemäß Fig. 5,
Fig. 8 die Lage eines Kettengliedes in einem Kupplungselement der Orientierung U gemäß Fig. 6,
Fig. 9 schematisch eine erste Anordnung von Kupplungselementen eines Zweistrangkettenförderers,
Fig. 10 schematisch eine zweite Anordnung von Kupplungselementen eines Zweistrangkettenförderers,
Fig. 11 schematisch eine Anordnung von Kupplungselementen eines Dreistrangkettenförderers,
Fig. 12 schematisch eine Anordnung von Kupplungselementen eines Fünfstrangkettenförderers,
Fig. 13 die perspektivische Ansicht eines Teiles eines Kettenförderers gemäß Fig. 11 mit durch Taschenkettenräder antreibbaren Kettensträngen und
Fig. 14 die perspektivische Ansicht eines Teiles eines Kettenförderers gemäß Fig. 11 mit durch Zahnkettenräder antreibbaren Kettensträngen.

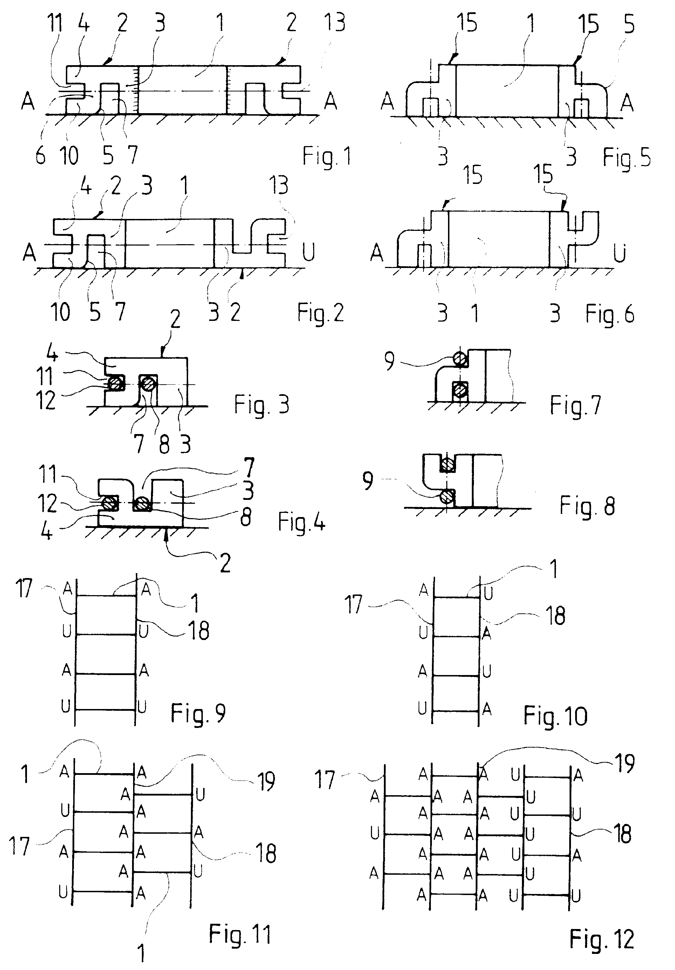

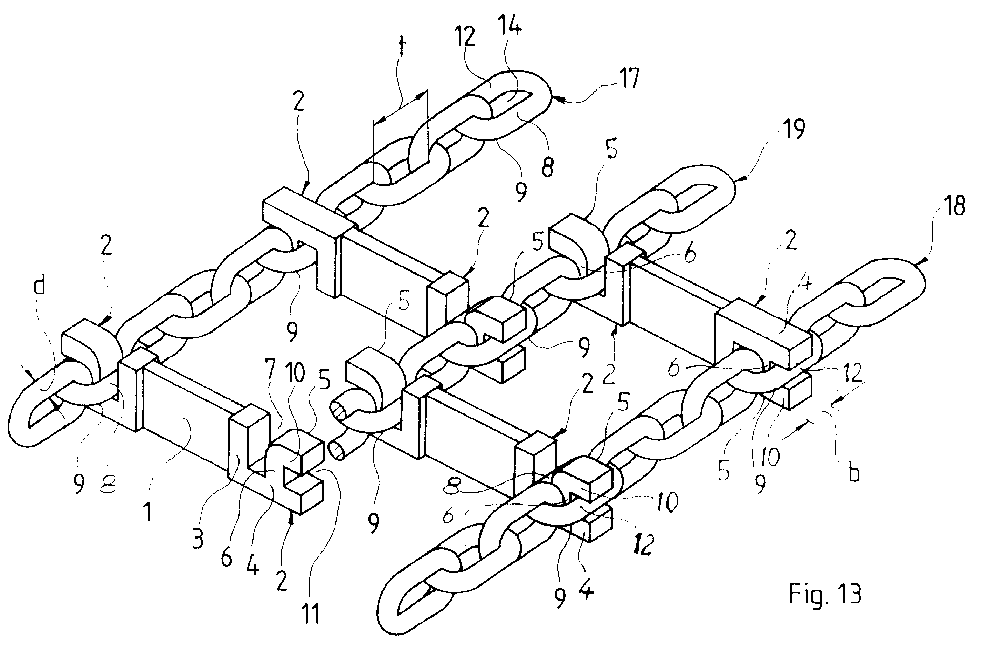

In Fig. 1 ist 1 ein als Kratzer ausgebildetes Förderorgan an dessen sich gegenüberliegende Enden zwei hinsichtlich ihrer Form und Abmessungen gleiche Kupplungselemente 2 geschweißt sind. Beide Kupplungselemente 2 weisen einen Anschlußteil 3 und einen sich hieran anschließenden Auslegerarm 4 auf. Im Abstand vom freien Ende des Auslegerarmes 4 ist dieser mit einem abgewinkelten bzw. gekröpften Vorsprung 5 versehen, dessen einer Schenkel 6 zusammen mit dem Anschlußteil 3 des jeweiligen Kupplungselementes 2 einen ersten Führungsschlitz 7 zur Aufnahme des innen liegenden Gliedschenkels 8 eines Anschlußgliedes 9 (vgl. Fig. 13) bildet und dessen anderer Schenkel 10 zusammen mit dem freien ende des Auslegerarmes 4 einen Führungsschlitz 11 für den außen liegenden Gliedschenkel 12 des Anschlußgliedes 9 formt.

Im Falle der Fig. 1 haben beide Kupplungselemente 2 die gleiche Orientierung A, d.h. sie greifen von oben so in ein horizontal liegendes Anschlußglied 9 ein, wie dies in Fig. 3 dargestellt ist.

In Fig. 2 dagegen ist eines der mit dem Förderorgan 1 verbundenen Kupplungselemente 2 gegenüber dem anderen um 180° um die Achse gedreht angeordnet. Es hat die Orientierung U und greift, wie in Fig. 4 gezeigt, von unten in den lichten Innenraum 14 eines Anschlußgliedes 9 ein.

Die in den Fig. 1 - 4 gezeigten Kupplungselemente 2 sind für Kettenförderer bestimmt, deren Kettenstränge durch Taschenkettenräder angetrieben werden. In den Fig. 5 - 8 sind demgegenüber ebenfalls als Kratzer ausgebildete Förderorgane 1 eines Kettenförderers dargestellt, dessen Kettenstränge durch Zahnkettenräder antreibbar sind. Die Förderorgane 1 sind auch in diesem Falle an ihren beiden Enden mit identischen Kupplungselementen 15 versehen. Bei den Kupplungselementen 15 fehlt ein Auslegerarm 4. Stattdessen ist der wiederum winkelförmige Vorsprung 5 unmittelbar am Anschlußteil 3 angeordnet.

Das Förderorgan 1 gemäß Fig. 5 weist zwei Kupplungselemente 15 mit nach unten gerichteten Vorsprüngen 5 auf, deren Orientierung mit A bezeichnet ist. Die Kupplungselemente des Förderorganes 1 gemäß Fig. 6 haben wie die Kupplungselemente 2 des Förderorgans 1 gemäß Fig. 2 Vorsprünge 5 unterschiedlicher Orientierung A und U. Die Art des Eingriffes der Vorsprünge 5 in vertikale Anschlußglieder 9 zeigen die Fig. 7 und 8.

In den Fig. 9 - 12 sind Möglichkeiten der Anordnung von als Kratzer ausgebildeten Förderorganen 1 bei Kettenförderern mit zwei, drei und fünf Kettensträngen dargestellt. Man erkennt, daß mindestens die den Anschlußgliedern der jeweils äußeren Kettenstränge 17,18 zugeordneten, in Kettenstrangrichtung aufeinanderfolgenden Kupplungselemente unterschiedliche Orientierungen A bzw. U aufweisen. Wie ein Vergleich der Figurenpaare 3 und 4 bzw. 7 und 8 deutlich macht, wird durch die Form und die wechselnde Anordnung der Vorsprünge 5 ein Verdrehen der Kettenstränge zumindest dann verhindert, wenn die Zahl der zwischen den Kupplungselementen gelegenen Glieder in Grenzen bleibt. In der Praxis heißt dies, daß der Abstand zwischen zwei aufeinanderfolgenden, mit einem äußeren Kettenstrang 17 bzw. 18 verbundenen Kupplungselementen 2 bzw. 15 höchstens gleich der achtfachen Teilung t der Glieder der Kettenstränge sein sollte. Dies schließt selbstverständlich nicht aus, daß auch bei grösseren Abständen zwischen aufeinanderfolgenden Kupplungselementen 2 bzw. 15 eine lagestabilisierende Wirkung für die Kettenstränge erzielt wird.

Bei dem in Fig. 13 dargestellten Teil eines Dreistrangkettenförderers ist der Abstand zwischen den den äußeren Kettensträngen 17, 18 zugeordneten Kupplungselementen 2 jeweils gleich der vierfachen Gliedteilung t, d.h. in jedes zweite Horizontalglied der äußeren Kettenstränge 17,18 greift ein Vorsprung 5, während im Falle des mittleren Kettenstranges 19 jedes Horizontalglied als Anschlußglied 9 für ein Kupplungselement 2 genutzt wird. Diese Lösung bietet sich bei der Förderung schweren brockenförmigen Fördergutes durch einen Kratzerförderer an, da hier die Gefahr besteht, daß sich sogenannte Fische, das sind diskusförmige Förderbrocken, unter einen Kettenstrang oder ein Kratzeisen schieben und diesen bzw. dieses mehr oder weniger stark anheben und dabei den Kettenstrang zu verdrehen suchen. Zur einwandfreien Verbindung zwischen den Förderorganen 1 und den Kettensträngen 17,18,19 trägt im übrigen der Umstand bei, daß die Vorsprünge 5 der Kupplungselemente 2 die lichten Innenräume der Anschlußglieder 9 annähernd voll ausfüllen, d.h. daß die Breite b der Vorsprünge 5 nur geringfügig kleiner als die Differenz aus der Teilung t und der doppelten Nenndicke d der Anschlußglieder ist.

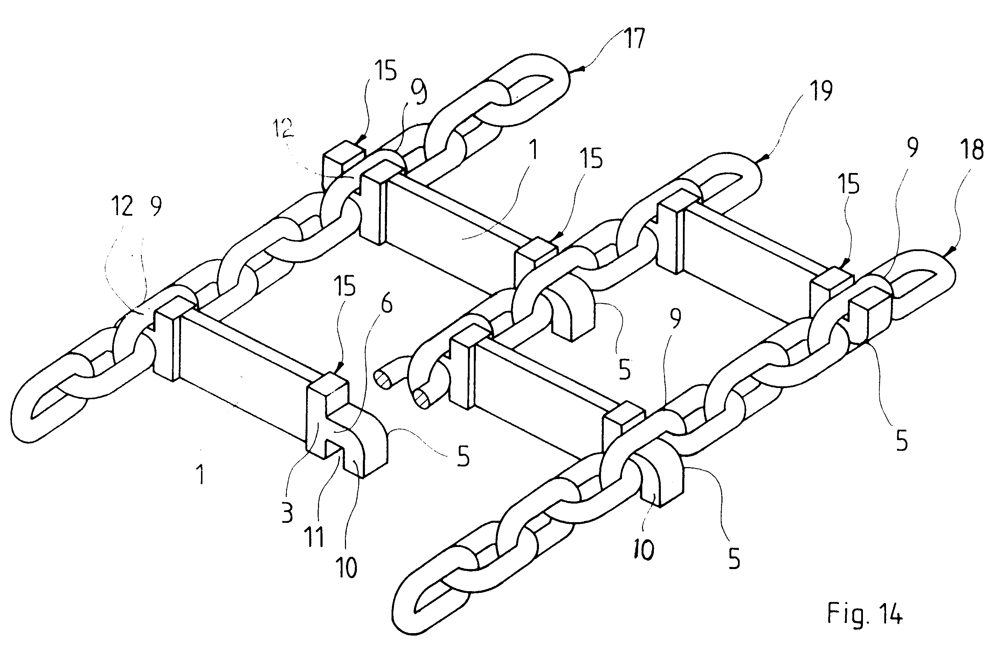

Die Kettenstränge 17,18,19 des in Fig. 13 dargestellten Kettenförderers sind, wie bereits zum Ausdruck gebracht, zum Lauf über Taschenkettenräder geeignet. Die Fig. 14 zeigt demgegenüber einen Dreistrangkettenförderer, dessen Kettenstränge 17,18,19 durch Zahnkettenräder angetrieben werden können. Die Anschlußglieder 9 sind hier folglich nicht horizontal, sondern vertikal orientiert.

## Patentansprüche

1. Mehrstrangkettenförderer, bei dem die Förderorgane (1) mit zwei in gleich orientierte Anschlußglieder (9) benachbarter Kettenstränge (17,18,19) greifenden Kupplungselementen (2, 15) versehen sind, die jeweils einen abgewinkelten Vorsprung (5) aufweisen, dessen einer Schenkel (6) weitgehend den lichten Innenraum des ihm zugeordneten Anschlußgliedes ausfüllt, und dessen anderer, ein abgewinkeltes freies Ende bildender Schenkel (10) jeweils einen Längsschenkel des Anschlußkettengliedes (9) hintergreift, dadurch **gekennzeichnet**, dass die den Anschlußgliedern (9) der äusseren Kettenstränge (17,18) des Mehrstrangkettenförderers zugeordneten Vorsprünge (5) von in Kettenstrangrichtung aufeinanderfolgenden Kupplungselementen (2,15) derart in die lichten Innenräume (14) der Anschlussglieder (9) greifen, dass die ihre abgewinkelten Enden bildenden anderen Schenkel (10) in unterschiedliche Richtungen weisen.

2. Mehrstrangkettenförderer nach Anspruch 1, dadurch **gekennzeichnet**, dass die den Anschlussgliedern (9) von zwischen den äusseren Kettensträngen (17,18) gelegenen inneren Kettensträngen (19) zugeordneten Vorsprünge (5) mindestens jeweils zweier in Kettenstrangrichtung aufeinanderfolgender Kupplungselemente (2,15) für ein und denselben Kettenstrang von der gleichen Seite in die lichten Innenräume (14) der Anschlussglieder (9) greifen.

3. Mehrstrangkettenförderer nach Anspruch 1 oder 2, dadurch **gekennzeichnet**, dass die, in die lichten Innenräume der Anschlusskettenglieder greifenden Schenkel (6) der Vorsprünge (5) der an jeweils einem Förderorgan (1) angeordneten Kupplungselemente (2, 15) bei einem Teil der Förderorgane (1) in die gleiche Richtung und bei einem anderen Teil der Förderorgane (1) in entgegengesetzte Richtungen weisen.

4. Mehrstrangkettenförderer nach einem der Ansprüche 1 bis 3, dadurch **gekennzeichnet**, dass die Breite (b) der Vorsprünge (5) nur geringfügig kleiner als die Differenz aus der Teilung t und der doppelten Nenndicke d der Anschlussglieder (9) ist.

5. Mehrstrangkettenförderer mit Taschenkettenrädern passierenden Kettensträngen nach einem der Ansprüche 1 bis 4, dadurch **gekennzeichnet**, dass jeder Vorsprung (5) im Abstand vom freien Ende eines Auslegerarmes (4) an diesem angeordnet ist.

6. Mehrstrangkettenförderer nach Anspruch 5, dadurch **gekennzeichnet**, dass der eine Schenkel (10) der Vorsprünge (5) mit einem parallel zu ihm verlaufenden freien Ende des Auslegerarmes (4) einen ersten Führungsschlitz (11) zur Aufnahme des einen Gliedschenkels (12) eines Anschlussgliedes (9) bildet und dass der andere Schenkel (6) des Vorsprunges (5) zusammen mit einem Anschlussteil (3) des Kupplungselementes (2) einen senkrecht zum ersten Führungsschlitz (11) verlaufenden zweiten Führungsschlitz (7) zur Aufnahme des anderen Schenkels (8) des gleichen Anschlussgliedes (9) formt.

7. Mehrstrangkettenförderer nach einem der Ansprüche 1 bis 6, dadurch **gekennzeichnet**, dass der Abstand zwischen den in Kettenstrangrichtung aufeinanderfolgenden, den äusseren Kettensträngen (17,18) zugeordneten Kupplungselementen (2,15) höchstens gleich der acht fachen Teilung t der Glieder der Kettenstränge ist.

8. Mehrstrangkettenförderer nach Anspruch 7, dadurch **gekennzeichnet**, dass zwischen zwei aufeinanderfolgenden Anschlussgliedern (9) der äusseren Kettenstränge (17,18) höchstens drei weitere Kettenglieder angeordnet sind.

9. Mehrstrangkettenförderer nach einem der Ansprüche 1 bis 8, dadurch **gekennzeichnet**, dass seine Förderorgane (1) von Kratzern gebildet werden.

## Claims

1. A multiple strand chain conveyor, in which the conveyor members (1) have two coupling elements (2, 15) which engage in alike orientated connecting links (9) of neighbouring chain strands (17, 18, 19), said coupling links each having an angled projection (5), one limb (6) of which predominantly fills the enclosed space of the facing connecting chain link, with the other limb (10) forming an angular free-end and engaging a longitudinal limb of the connecting chain link (9), characterized in that the projections (5) of sequential coupling elements (2, 15) in the chain strand direction which face the connecting links (9) of the external chain strands (17, 18) of the multiple strand chain conveyor engage in the enclosed spaces (14) of the connecting links (9) in such a way that their other, angular end-forming limbs (10) face in different directions.

2. A multiple strand chain conveyor according to Claim 1, characterized in that the projections (5) of at least two sequential coupling elements (2, 15) in the chain strand direction facing the connecting links (9) of the internal chain strands (19) between the external chain strands (17, 18) each engage from the same side in the enclosed space (14) of the connecting links (9) of the one and the same chain strand.

3. A multiple strand chain conveyor according to Claim 1 or 2, characterized in that the limbs (6) of the projections (5) of the coupling elements (2, 15) arranged on one conveyor member (1) which engage in the enclosed spaces of the connecting chain links face in the same direction for one part of the conveyor members (1) and in the opposing direction for another part of the conveyor members (1).

4. A multiple strand chain conveyor according to any one of Claims 1 to 3, characterized in that the width (b) of the projections (5) is only slightly smaller than the difference between the spacing t and the double nominal thickness d of the connecting links (9).

5. A multiple strand chain conveyor with chain strands passing chain wheels with pockets according to any one of Claims 1 to 4, characterised in that each projection (5) is arranged on a cantilever arm (4) at a distance from the free end thereof.

6. A multiple strand chain conveyor according to Claim 5, characterized in that the one limb (10) of the projection (5), together with a parallel free end of the cantilever arm (4), forms a first guide slot (11) to accommodate one link limb (12) of a connecting link (9) and that the other limb (6) of the projection (5), together with a connecting part (3) of the coupling element (2), forms a second guide slot (7) which runs vertically to the first guide slot (11) to accommodate the other limb (8) of the same connecting link (9).

7. A multiple strand chain conveyor according to any one of Claims 1 to 6, characterized in that the distance between the coupling elements (2, 15) arranged sequentially in the direction of the chain strand and facing the external chain strands (17, 18) is maximally equal to the eightfold spacing t of the links of the chain strands.

8. A multiple strand chain conveyor according to Claim 7, characterized in that maximally three further chain links are arranged between two sequential connecting links (9) of the external chain strands (17, 18).

9. A multiple strand chain conveyor according to any one of Claims 1 to 8, characterized in that the conveyor members (1) are in the form of scrapers.

## Revendications

1. Transporteur à chaînes à plusieurs brins, dans lequel les organes transporteurs (1) sont munis de deux éléments d'accouplement (2, 15), en prise avec des maillons de raccordement (9) de même orientation des brins de chaînes (17, 18, 19) adjacents, et dont chacun présente une saillie (5) coudée, dont une branche (6) comble en grande partie l'espace intérieur libre du maillon de raccordement gui lui est associé, et dont l'autre branche (10), gui forme une extrémité libre coudée, est engagée derrière une branche longitudinale d'un maillon de chaîne de raccordement (9), caractérisé en ce que les saillies (5) d'éléments d'accouplement (2, 15) gui se succèdent selon la direction des brins de chaînes gui sont associées aux maillons de raccordement (9) des brins de chaînes extérieurs (17, 18) du transporteur à chaînes à brins multiples sont engagées dans les espaces intérieurs libres (14) des maillons de raccordement (9) de telle manière que leurs autres branches (10) formant les extrémités coudées pointent dans des directions différentes.

2. Transporteur à chaînes à brins multiples selon la revendication 1, caractérisé en ce que les saillies (5) d'au moins deux éléments d'accouplement (2, 15) qui se succèdent selon la direction des brins de chaînes gui sont associées aux maillons de raccordement (9) appartenant à des brins de chaînes (19) intérieurs, situés entre les brins de chaînes (17, 18) extérieurs sont engagées, pour un même brin de chaîne, par le même côté dans les espaces intérieurs libres (14) des maillons de raccordement (9).

3. Transporteur à chaînes à brins multiples selon la revendication 1 ou 2, caractérisé en ce que les branches (6) des saillies (5) des éléments d'accouplement (2, 15) associés à un organe transporteur gui sont engagées dans les espaces intérieurs libres des maillons de raccordement des chaînes pointent dans la même direction pour une partie des organes transporteurs (1) et, dans des direction opposées pour une autre partie des organes transporteurs (1).

4. Transporteur à chaînes à brins multiples selon une des revendications 1 à 3, caractérisé en ce que la largeur b des saillies (5) n'est que légèrement inférieure à la différence entre le pas t et le double de l'épaisseur nominale d des maillons de raccordement (9).

5. Transporteur à chaînes à brins multiples comportant des brins de chaînes qui s'ajustent dans des roues à chaînes à poches, selon une des revendications 1 à 4, caractérisé en ce que chaque saillie (5) est prévue sur un bras (4) en porte-à-faux, à distance de l'extrémité libre de ce bras.

6. Transporteur à chaînes à brins multiples selon la revendication 5, caractérisé en ce que l'une (10) des branches des saillies (5) forme, avec une extrémité libre du bras (4) en porte-à-faux gui s'étend parallèlement à cette branche, une première fente de guidage (11) destinée à recevoir l'une (12) des branches d'un maillon (9) de raccordement, et en ce que l'autre branche (6) de la saillie (5) forme, en combinaison avec une partie de fixation (3) de l'élément d'accouplement (2), une seconde fente de guidage (7) s'étendant perpendiculairement à la première fente de guidage (11) et destinée à recevoir l'autre branche (8) du même maillon de raccordement (9).

7. Transporteur à chaînes à brins multiples selon une des revendications 1 à 6, caractérisé en ce que la distance entre les éléments d'accouplement (2, 15) gui se succèdent dans la direction des brins de chaînes et qui sont associés aux brins de chaînes (17, 18) extérieurs est au maximum égale à huit fois le pas t des maillons des brins de chaînes.

8. Transporteur à chaînes à brins multiples selon la revendication 7, caractérisé en ce qu'entre deux maillons de raccordement (9) successifs des brins de chaînes (17, 18) extérieurs sont disposés au maximum trois autres maillons de chaînes.

9. Transporteur à chaînes à brins multiples selon une des revendications 1 à 8, caractérisé en ce que ces organes transporteurs (1) sont constitués par des raclettes.
